# EUROPEAN PATENT APPLICATION

(11) **EP 3 002 699 A1**
(43) Date of publication of application: **06.04.2016**
(21) Application number: 14306529.0
(22) Date of filing: 30.09.2014
(51) Int. Cl.: G06F 21/10

(54) **A method for controlling the execution of an application in a virtual computer environment**

(71) Applicant: ALCATEL LUCENT, 92100 Boulogne-Billancourt (FR)
(72) Inventor: Saker, Daniel, 91620 Nozay (FR); Bawa, Satvinder, Ottawa, Ontario ON K2K 2E6 (CA)
(74) Representative: Loyer & Abello

(57) **Abstract**

The disclosure provides a method for controlling the execution of an application in a virtual computer environment, comprising the steps of:
- receiving a request (19) for launching an action performed by an application (5) executed in the virtual computer environment (4),
- determining a number of requested accounting units wherein the accounting units directly or indirectly represent an amount of resources consumed by the application which are necessary to launch the action,
-sending an authorization request (20) to a license system (17), the authorization request comprising the identity of the application and the number of requested accounting units,
- receiving an authorization response (21) from the license system (17), the authorization response comprising the identity of the application and a number of granted accounting units,
- checking if the number of granted accounting units matches the number of requested accounting units and authorizing the launching of the action in the affirmative, and inhibiting the launching of the action in the negative.

The disclosure also provides a license device.

## Description

### Field

This disclosure relates to the technical field of controlling an application in a virtual computer environment.

### Background

In native physical hardware environment, a network equipment provider provides a network operator with software application tied to a physical hardware platform. The physical hardware platform is sized according a contractual number of accounting unit. For example, the software application is an online charging system and the physical hardware platform used to run the online charging system comprises contractual resourced sized to control in real-time the phone calls of a contractual number of network customers.

This delivery mode of network applications coupling software with hardware platform providing network equipment provider with full control of delivered capacity. But this model will face challenges within the virtualization evolution. In virtualized environment, network equipment providers may provide only virtual network functions to run as virtual machines in virtual hardware environment. Network operator will be able to launch instances of these virtual network applications as much as enough virtual hardware resources are available. With this approach, where hardware resources are no more provided and/or controlled by network equipment provider with loss of control on used capacity of virtual network functions.

### Summary

The idea is to enforce control on right to use licenses and track used capacity by these virtual network functions.

In an embodiment, the disclosure provides a method for controlling the execution of an application in a virtual computer environment, the method comprising the steps of:
receiving a request for launching an action performed by an application executed in the virtual computer environment,
determining a number of requested accounting units wherein the accounting units directly or indirectly represent an amount of resources consumed by the application which are necessary to launch the action,
   - sending an authorization request to a license system, the authorization request comprising the identity of the application and the number of requested accounting units,
   receiving an authorization response from the license system, the authorization response comprising the identity of the application and a number of granted accounting units,
   checking if the number of granted accounting units matches the number of requested accounting units and authorizing the launching of the action in the affirmative, and inhibiting the launching of the action in the negative.

In embodiments, this invention has several unique benefits:
- To control and track the used number of accounting unit running a software application deployed on a virtualized infrastructure environment.
- To control and track the following accounting units: number and type of active application instances, number and type of active virtual machines, resources emulating the application instances and machines, in order to check and report if the used number of accounting units is below a contractual threshold.

According to embodiments, such a method can comprise one or more of the features below.

In embodiments, the method further comprises the step of receiving an alert message if the number of granted accounting units does not match the number of requested accounting units

In embodiments, the accounting units are resource accounting units and are selected in the following list:
application instances, an application instance comprising a set of virtual machines, and/or central processing units and/or memory resources, which are part of the resources consumed by the application
virtual machines consumed to run the application per application instance
central processing units consumed to run the application per application instance
virtual central processing units consumed to run the application per application instance
random access memory and/ or storage capacity used to report the number of sessions and/or transactions per second,
interface cards used to deploy the application

In embodiments, the action is selected in the following list:
Start-up of an application instance, an application instance comprising a set of virtual machines, and/or central processing units and/or memory resources, which are part of the resources consumed by the application
Restart of an application instance
Shutdown of an application instance
Start-up of a virtual machine,
Restart of a virtual machine,
Shutdown of a virtual machine,
Scaling down an application instance by removing virtual resources such as central processing unit , random access memory, storage, network resources, application instance and/or virtual machine
Scaling up an application instance by starting new virtual resources such as central processing unit , random access memory, storage, network resources, application instance and/or virtual machine
Installing the application
Opening an emergency protocol
Upgrading the application.

Thanks to these features, it is possible to control and track the used number of accounting unit running a software application during the lifecycle of the accounting units, for example the application instances and/or machines. The lifetime includes the installation, demonstration, upgrade, maintenance phases as well as the scaling up, and scaling down of the accounting units.

In embodiments, the application is an application managing the transactions on a network.

In embodiments, the accounting units comprise a number of employed native and/or virtual network interfaces cards, an number of employed IP addresses and network ports, of native and/or virtual routers, native and/or virtual optical cross-connects, native and/or virtual optical channels, native and/or virtual regenerators.

The application may be any virtualized network function. In an embodiment, the application is a policy control resource function. In another embodiment, the application is an online charging system.

In embodiments, the accounting units are network service accounting units and are selected in the following list:
number of subscribers managed by the application on the network
number of transaction per second on the network allowed by the application
active sessions per second, an active session comprising current transactions
request per second performed on the network managed by the application
call attempt per second on the client network managed by the application.

In an embodiment, the disclosure also provides a Control Device for controlling the execution of an application in a virtual computer environment, comprising a cloud management system comprising:
- an input for receiving a request for launching an action performed by an application executed in the virtual computer environment,
   a management unit configured for determining a number of requested accounting units wherein the accounting units directly or indirectly represent an amount of resources consumed by the application which are necessary to launch the action,
   an output for sending an authorization request to a license system, the authorization request comprising the identity of the application and the number of requested accounting units,
   the input further receiving an authorization response from the license system, the authorization response comprising the identity of the application and a number of granted accounting units,
   the management unit being further configured for checking if the number of granted accounting units matches the number of requested accounting units and authorizing the launching of the action in the affirmative, and inhibiting the launching of the action in the negative.

In embodiment, the Control device further comprises a license service comprising:
an input for receiving the authorization requestan output for transmitting the authorization response
a control unit configured for
calculating a total number of accounting units as a sum of a recorded number of current accounting units consumed by the application and of the requested number of accounting units,
comparing an authorization record to the authorization request, the comparison comprising checking that the identity of the application belongs to a recorded list of authorized applications and checking that the total number of accounting units is lower than the recorded number of authorized accounting units for the application
recording the sum value as the updating current accounting units emulating the application, and
a data repository in which is stored the recorded list of authorized applications and the recorded number of authorized accounting units for the application.

Thanks to these features, it is possible to prevent an eventual inappropriate usage of a delivered software application running over a contractual virtual platform, such as duplicating the virtual platform.

Thanks to these features, it is possible to prevent a running of a delivered software application over a non-contractual virtual platform.

Aspects of the invention stem for the observation that in virtualized infrastructure environment, the physical hardware platform is dissociable from the software application. The software application is deployed and run by one or more application instance or virtual machine over the virtualized infrastructure environment. The running of the software application over the virtualized infrastructure environment delivers a virtual image. The virtual image is usable as a recipe or a template in order to start more application instances and more virtual machines than contractually allowed for the software application over the virtualized hardware infrastructure.

Aspects of the invention are based on the idea of tracking the number of accounting units used by running software applications in order to control if the accounting units are below a contractual threshold.

Aspects of the invention are based on the idea of providing a virtual licensing mechanism such as a centralized licensing and/or certification server in order to track the number of accounting units used by the running of a software application.

### Brief description of the drawings

These and other aspects of the invention will be apparent from and elucidated with reference to the embodiments described hereinafter, by way of example, with reference to the drawings.
Figure 1 is a functional drawing showing the relation between an application platform represented in a virtualized layer diagram, a cloud management system and a centralized license service
Figure 2 is a call flow showing exchanges of messages between the application platform, the cloud management system and the centralized license service, which occur when an event happens in an application platform.

### Detailed description of the embodiments

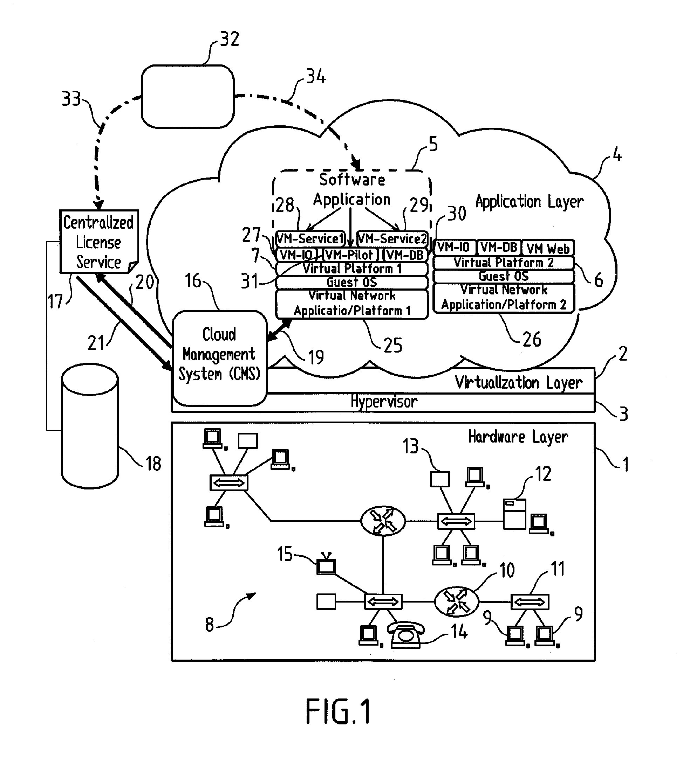

With reference to Figure 1, a virtualized environment running a software application 5 is schematically represented. A virtual machine (VM) is a distributed device operating on hardware resources of real network 8 architecture and functions. The resources of the real network 8 comprise computers 9, routers 10, switches 11, servers 12, data repositories 13, phone devices 14, TV devices 15 and the likes, physically and/ or wireless linked. The implementation of a VM involves a virtualization layer 2 comprising specialized hardware, software, or a combination of both. Virtualization of the resources on which is based the real network 8 provides multiple virtual networks 25 and 26 of the same architecture of the real network. Each virtual network 25 and 26 is capable of running complete operating systems and software applications 5 by the execution of the VMs.

The virtualized environment depicted on Figure 1 comprises two virtual operating platforms 6, 7 emulated through a hypervisor 3 from hardware resources of the real network 8 schematically depicted in a hardware layer 1. An application layer 4 is represented as a cloud emulated by the hypervisor 3 through the virtualization layer 2. Emulating is duplicating the functions of the real network 8 in a virtual network 25. The duplication aims that the emulated behavior closely resembles the behavior of the real network 8. The hypervisor 3 is a piece of computer software, firmware or hardware that creates, manages and runs VMs on a virtual operating platform 7. The virtual operating platform 7 is a part of the virtual network 25. The virtual operating platform 7 supports a plurality of VMs configured to run an application instance of a software application 5. An application instance refers to the running of a copy of a software application 5 in the application layer 4. Multiple application instances refer to several copies of the software application 5 running in parallel in the application layer 4.

In the illustrative example depicted on Figure 1, the virtual operating platform 7 supports a plurality of VMs in order to enable the running of the software application 5. Indeed, the application instance is constituted of 2 VMs 31 for pilot service in active/ standby mode, denoted VM-Pilot, 2 VMs 27 for IO stack and/or handler in active/standby mode denoted by VM- IO, 2 VMs 30 for database in active/standby mode, denoted by VM-DB, and 2 VMs 28 and 29 for application service in active/active mode or load sharing mode, denoted VM-Service1 and VM-Service2.

A VM-Pilot is a virtual machine network driver that allows the device emulator's operating system (OS) to emulate its own network connection.

A VM-DB is an emulated Database.

A VM IO enables one physical adapter card to appear as multiple virtual Network Interface Cards (NICs) and virtual Host Bus Adapters (HBAs) by abstracting the upper layer protocols from the physical connections. IO refers to Input-Output.

The software application 5 is deployed and sized on the VMs supported by the virtual operating platform 7.

The application instances, virtual machines and resources are referred to as accounting units. The number of accounting units of each type is contractual as the software application 5 is sized for a usage. For example, the software application 5 is a policy control resource function delivered by a Provider to an Operator. For example, the Operator may drive up the number of subscribers from 100 000, representing 20 000 transactions/sec, to 500 000 subscribers by driving up the accounting units. For example, the software application 5 is an online charging system, wherein the contractual number of accounting units is sized to control in real-time the phone calls of a contractual number of network customers.

The present invention aims to prevent an eventual inappropriate usage of a delivered software application running over a contractual virtual platform, such as duplicating the virtual platform.

The present invention aims to prevent a running of a delivered software application over a non-contractual virtual platform.

A solution is to control and track such driving up of the accounting units to check, report and authorize as a function of the contractual accounting units threshold. In other words, the present disclosure allows controlling and tracking in real time the modification of the applicative resources i.e. the resources used to run the software application 5.

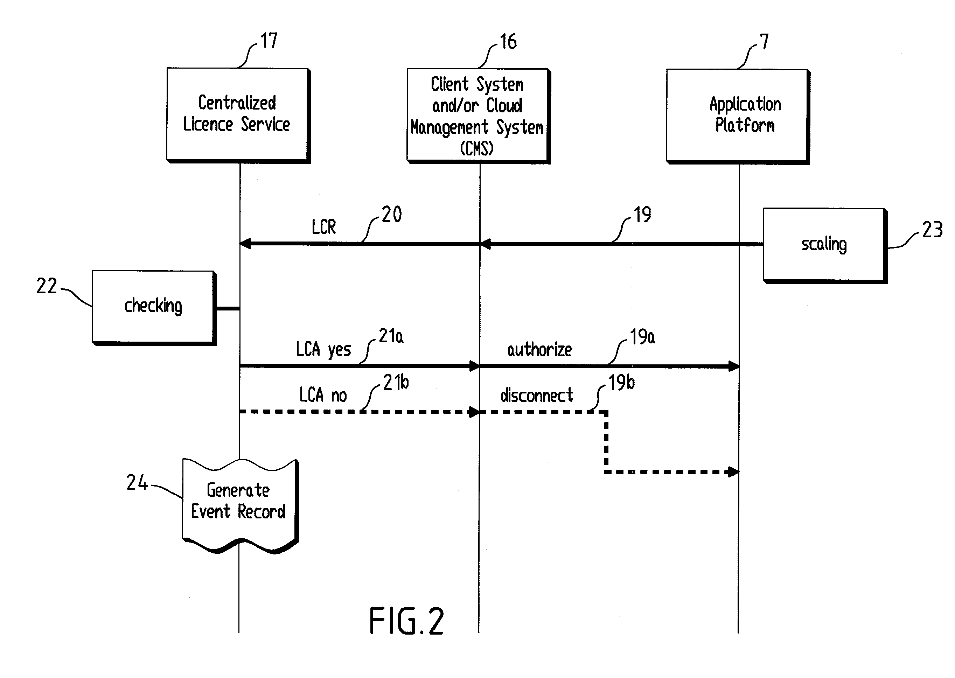

The present invention provides a centralized license service referenced in the following by a License Device for controlling and tracking a total number of accounting units of Virtualized Network Functions (VNF) instances deployment in a virtual environment. The proposed licensing control and tracking protocol, also referred as mechanism of virtualized network applications instances can be implemented in distributed way by each Virtual Network Function Manager (VNF Manager) to communicate with centralized license service, as VNF manager is responsible for the lifecycle management of virtualized network function instances. The lifecycle comprises the start, the stop, the restart the scaling up and scaling down, etc. Alternatively, the proposed licensing control and tracking protocol of virtualized network applications instances can be implemented in distributed way by the Element Management system as well as by the Element Management System (EMS) and/or the Network Management System (NMS) which are responsible for configuration and accounting of VNF instances. Alternatively, for management facility, the proposed licensing control and tracking protocol of virtualized network applications instances can be implemented in centralized way by the NFV management and orchestration service or the Cloud Management system (CMS). Such a License device comprises a centralized license service 17 and a client side device of the licensing control and tracking protocol. In the illustrative embodiment depicted on Figures 1 and 2, the client side of the licensing control and tracking protocol is implemented by the CMS 16. In non-illustrated embodiments, the client side device can be implemented by Virtual Network Function Manager (VNF Manager) and/or Element Management System (EMS) and/or the Network Management System (NMS) and/or NFV management and orchestration service The VNF Manager and/or EMS and/or VNF Manager and/or EMS and/or CMS 16 and the centralized license service 17 are configured to communicate in order to manage the virtual platform 7 as it is described in the following.

The VNF Manager and/or EMS and/or CMS 16 is configured to communicate with the virtual platform 7 as represented by arrow 19 in order to manage the launching, the shutting down and the running of the virtual machines and the application instances on the virtual platform.

The VNF Manager and/or EMS and/or CMS 16 is configured to communicate with the centralized license service 17 through a protocol interface in order to request and report for events. A protocol is used for the communication through the protocol interface. The protocol defines a Licensing Control Requests 20 (LCR) submitted by the Operator towards the centralized license service 17 and returns a Licensing Control Answers 21 (LCA).

The present disclosure also provides a license control method for controlling and tracking a total number of accounting units in a virtual environment. The method comprises exchanges of messages between the VNF Manager and/or EMS and/or CMs 16 and the centralized license service 17.

With reference to Figure 2, the exchanges of messages are schematically depicted.

The application platform 7 is configured to send a reporting message 19 to the VNF Manager and/or EMS and/or CMS 16 at each of following events 23 to be launched:
- Start-up of an application instance or virtual machine of software application
- Restart of an application instance or virtual machine of software application
- Shutdown of an application instance or virtual machine of software application
- Scaling up of an application instance. Scaling up may comprises a start of a new virtual machine to be included in the application instance and/or attaching more virtual resources to the application instance. The virtual resources may comprise as central processing unit (CPU), random access memory (RAM), storage capacity, virtual network parts and the like.
- Scaling down of an application instance. Scaling down may comprises a shutdown of virtual machine included in the application instance and/or removing virtual resources such as CPU, RAM, storage capacity, virtual network parts and the like.
- Installation of an operating system on an application instance
- Emergency event, such as allowance of a running of an application instance in a grace delay, or shutting down a non-contractual application instance
- Upgrade of an application instance
- Other events of the like.

The reporting message 19 includes a report of such an event 23 to be launch and the source of the request to launch such an event. The source of the request is the application platform 7.

After receiving such a reporting message 19, the protocol foresees, for the VNF Manager and/or EMS and/or CMS 16, submitting the LCR 20 to the Centralized License Service 17 in order to request the Centralized License Service 17 the allowance of launching such an event 23.

The LCR 20 comprises information about an application instance to be launched or scaled, such as:
- The name of the application instance
- The type of the application instance
- The identifier of the application instance
- The requested action to be launched on the application instance. For example, such an action may be a start-up of the application instance
- The requested accounting units. For example, the accounting units may be the number of VMs and the type of the VMs in the application instance. The type of a VM may be selected in the following list: driver, database, service, IO, web and the like.
- The number and identity of Requested CPU per VM type in the application instance

In an embodiment, the protocol interface is implemented through a variety of protocols, such as Extensible Markup Language / Hypertext Transfer Protocol (XML/HTTP) interface, Diameter or Lightweight Directory Access Protocol (LDAP). Diameter is an authentication, authorization, and accounting protocol for computer networks.

For the sake of illustration, a description of a Diameter-based LCR message structure format is provided below:

```
      <LCR> ::= < Diameter Header: xxxx>
               {Origin-Host/ Origin-Realm}
               {Destination-Host/Destination-Realm}
               {Application-Id}
               [Requested-Action]
               [Event-Timestamp]
               [Termination-Cause]
              *[License-Information]
               *[AVP]
```

Some elementary parts of the structure format will now be described more in detail :
- ***{Origin-Host*/ *Origin-Realm* }** is a part of the structure which identifies the client's address originating the request,
- ***{Destination-Host*/*Destination-Realm}*** is a part of the structure which identifies the server address destination of the request. The server address destination of the request is the server address of the centralized license service 17.
- ***{Application***-***Id}*** is a part of the structure which is an identifier of request submitting the request. The request comprises the following objects: *[ Requested-Action], [Event-Timestamp], [Termination-Cause], *[License-Information]* and *[AVP].*
   ∘ *[Requested-Action]* is an object of ***{Application-Id}*** comprising a value characterizing an event to launch. [Requested-Action] can take the following values corresponding to the events 23 above described:
      ▪ Start-up. The value Start-up denotes for an application instance start-up.
      ▪ Shutdown. The value Shutdown denotes for a application instance shutdown.
      ▪ VM-startup. The value VM-startup denotes for a VM start-up.
      ▪ VM-shutdown. The value VM-shutdown denotes for a VM shutdown.
      ▪ Restart. The value Restart denotes for an application instance restart.
      ▪ VM-restart. The value VM-restart denotes for a VM restart in an application instance.
      ▪ Scaling-IN. The value Scaling-IN denotes for a removing of a VM from an application instance.
      ▪ Scaling-OUT. The value Scaling-OUT denotes for a creation and/or start of a new VM in an application instance.
      ▪ Scaling-UP. The value Scaling-UP denotes for an attachment of additional virtual resources to an application instance or to a VM in an application instance.
      ▪ Scaling-DOWN. The value Scaling-DOWN denotes for a detachment of virtual resources from an application instance or from a VM in an application instance.
   o **[License-Information]* is an object of ***{Application-Id }*** which represents a grouped attribute-value pair (AVP) requesting the allowance of the addition of an application instance, or of a VM, or of any resources, to the current resources used by running a software application. AVP is a fundamental data model in computing systems and applications in which all or part of the data model may be expressed as a collection of tuples *<attribute name, value>* wherein each element is an attribute-value pair. For example, **[License-Information]* has following format:
      *License -Information :: = < AVP Header: yyyy>*
      *[Virtual-Instance-Name]*
      *[Virtual-Instance-Id]*
      *[Virtual-Instance-Type]*
      *[Virtual-Instance-Number]*
      *[Virtual-Instance-Number-of-VM]*
      *[Virtual-Instance-Number-of-CPU]*
      ***[Virtual-Machine-Group]**
      *[Virtual-Instance-Start-Time]*
      *[Virtual-Instance-Stop-Time]*
   ▪ ***[Virtual-Machine-Group]** is a parameter of **[License-Information]* which is also a grouped AVP allowing transmitting all information of collection of virtual machine constituting the network application instance and have following format:
   *Virtual-Machine -Group*:: = *< AVP Header zzzz>*
   *[Virtual-Machine-Name]*
   *[Virtual-Machine-Type]*
   *[Virtual-Machine-Id]*
   *[Virtual-Machine-Number]*
   *[Virtual-Machine-CPU]*
   *[Virtual-Machine-RAM]*
   *[Virtual-Machine-Network-Interfaces]*
   *[Virtual-Machine-Start-Time]*
   *[Virtual-Machine-Stop-Time]*

The centralized license service 17 is configured to receive the LCR 20.

The centralized license service 17 is linked to a data repository 18 depicted on Figure 1 comprising a database, also referred to as a table, listing all granted licenses of application instances. Each granted instance will have a record in the table defining following information:
- Identity of the granted application instance, comprising:
   o Name of the software application
   o Provider of the software application
   o Operator owner of the network
   o Name of the application instance of the software application
   o Identifier of the application instance running the software application
   o Type of the application instance running the software application. The type is selected between native and virtual. Native qualifies an application instance running on an original hardware environment whereas virtual qualifies an application instance running on an emulated environment.
- Granted direct accounting units for the granted application instance, representing the resources granted for the running of the granted application instance, comprising:
   o Maximum number of allowed application instances
   o Maximum number of granted VMs for the type of the application instance running the software application
   o Maximum number of granted VMs per type of VM. Maximum number of allowed native or virtual CPU for the type of the application instance running the software application
   o Maximum number of allowed native or virtual CPU per VM type for the type of the application instance running the software application
   o Maximum RAM memory granted capacity for the application instance running the software application
   o Maximum number of allowed virtual network interfaces resources
   o Maximum transaction per second over the network for the application instance running the software application
   o Maximum storage capacity and/or network interface cards (NICs) for the application instance running the software application
- Granted indirect accounting units for the granted application instance, representing the allowed scale of the software application, for example:
   o Maximum capacity of the application instance running the software application in term of maximum allowed subscriber and/or maximum allowed Transaction Per Second (TPS) in the network and/or Maximum allowed active Session per Second (SPS) and the like.
   ∘ Number of subscriber context, for example, below 500 000 subscribers managed by the software application.

The centralized license service 17 is configured to perform the following steps represented by an action 22 on Figure 2 before to be able to return the LCA 21 to the VNF Manager and/or EMS and/or CMS 16:
- In a first priority step, to get the input parameters from the LCR 20,
- In a second priority step, to verify whether the input parameters from the LCR 20 match a registered granted license of the application instance in the database in the data repository 18. The license is defined at a level selected between application instance level and VM level.
   ∘ In an embodiment, the license is defined at VM level. Therefore, one license is associated to each VM of the software application.
   ∘ In an embodiment, the license is defined at application instance level. Therefore, one license is associated to each application instance.
- In a third step, to verify if each requested accounting unit is registered the data repository 18 as a granted accounting unit. In the case the requested accounting unit is not registered as a granted accounting unit, the LCA 21 will comprise information for enforced restrictions on the application instance and/or virtual machine
- In a forth step, to update related counters comprised in the centralized license service 17. The related counters enumerating the current number of active application instance, number of active virtual machine, and the like.
- In an optional fifth step, to trigger an alarm and/or a notification if required.
- In an optional sixth step, to trigger a generation of ticket to be registered in the centralized license service 17 database.
- In an optional last step, to perform any additional required tasks.

Then, the centralized license service 17 is configured to return a LCA 21 to the VNF Manager and/or EMS and/or CMS 16. The LCA may be an allowance 21a or a rejection 21b of the request to launch an event 23. The LCA may comprise the triggered alarm and/or notification if required. The centralized license service 17 also generates an event record 24 about the reception of the LCR and the emission of the LCA.

For the sake of illustration, a Diameter-based LCA format will be described:

```
      <LCA> ::= < Diameter Header: tttt>
               {Origin-Host/Origin-Realm}
               {Application-Id}
              [Event-Timestamp]
              [Result-Code]
              [Termination-Cause]
              *[Granted-License]
               *[AVP]
```

**[Granted-License]* is an object of ***{Application***-***Id}*** which comprises granted license information answering the request object called **[License-Information]* in LCR. **[Granted-License]* is a grouped AVP that transmits information elements about which resource requested is granted. **[Granted-License]* has a format as follows:
   *Granted-License :: =< AVP Header: uuuu> [Virtual-Instance-Name]*
      *[Virtual-Instance-Id]*
      *[Virtual-Instance-Type]*
      *[Virtual-Instance-Number] [Virtual-Instance-Granted-Number-of-Instances]*
      *[Virtual-Instance-Granted-Number-of-VM]*
      *[Virtual-Instance-Granted-Number-of-CPU]*
      *[Virtual-Instance-Granted-Number-of-Virtual Network Interfaces]*
***[Virtual-Machine-Group]**
   *[Virtual-Instance-Start-Time]*
   *[Virtual-Instance-Stop-Time]*
***[Virtual-Machine-Group]** is a parameter of **[Granted-License]* which is also a grouped AVP allowing transmitting information about granted licenses to the collection of virtual machine constituting the network application instance. ***[Virtual-Machine-Group]** has the following format:
   *Virtual-Machine -Group :: = < AVP Header: zzzz>*
      *[Virtual-Machine-Name]*
      *[Virtual-Machine-Type]*
      *[Virtual-Machine-Id]*
      *[Virtual-Machine-Granted-Number]*
      *[Virtual-Machine-granted-CPU]*
      *[Virtual-Machine-granted-RAM]*
      *[Virtual-Machine-granted-virtual network interface]*
      *[Virtual-Machine-Start-Time]*
      *[Virtual-Machine-Stop-Time]*

In the definition of the Diameter Commands, the AVPs used in the message format definitions have the following indication:
- <AVP> indicates a mandatory AVP with a fixed position in the message.
- {AVP} indicates a mandatory AVP in the message.
- [AVP] indicates an optional AVP in the message.
- *AVP indicates that multiple occurrences of an AVP are possible.

As shown on Figure 2, after receiving the LCA 21, the VNF Manager and/or EMS and/or CMS 16 is configured to authorize 19a and manage the event 23 or disconnect 19b the application instance or the VM of the application platform 7 as a function of the content of the LCA 21. In the case the content is an allowance 21a of the request to launch an event 23, then the VNF Manager and/or EMS and/or CMS 16 is configured to authorize 19a and manage the event 23. In the case the content is a rejection 21b of the request to launch an event 23, then the VNF Manager and/or EMS and/or CMS 16 is configured to disconnect 19b the application instance or the VM of the application platform 7.

Some illustrative events 23 are described in the following to illustrate the license control method performed by the centralized license control 17 in each illustrative event.

The first illustrative event 23 described is an application instance installation or start-up. In this case, the license of application instance or VM is checked and controlled either at installation or at start-up of software application. In a preferred embodiment, the license is checked at each start-up.

For each application instance, the centralized license control 17 is configured to track:
- The total number of active VMs constituting the application instance,
- The number of active VMs in the application instance per type of VM,
- The total number of CPU allocated for the application instance, i.e. for all active VMs constituting this application instance,
- The number of CPU allocated per VM type for the application instance, i.e. the number of CPU allocated per VM type constituting the application instance.

The LCR 20 is submitted towards the centralized license service 17, providing information about the application instance or the VM.

Then, the centralized license control 17 is configured to perform the verification that each requested accounting unit is a granted accounting unit. This verification in this particular case of the first illustrative event 23 comprises:
- If the name and type of the application instance to be installed or started up belongs to the granted application instances,
- If the total number of instances running the software application is below a maximum number of granted application instance of the type of the application instance to be installed or started up,
- If the total number of active VMs in the application instance to be installed or started up is below a maximum number of granted VMs for the application instance to be installed or started up,
- If the total number of active VMs per VM type is below a maximum number of granted VMs per VM type for the application instance to be installed or started up,
- If the total number of CPU allocated for the application instance to be installed or started up is below a maximum number of allowed CPU for the application instance to be installed or started up,
- If the total number of CPU allocated per VM Type for the application instance to be installed or started up is below a maximum number of allowed CPU per VM type for the application instance to be installed or started up.

The above list of verification is called start-up verifications in the following.

If the verification is positive, the centralized license service 17 is then configured to increase the counters of the application instances of this type currently deployed over the network. The counters allow keeping an updated tracking of the total number of application instances and the total number of active VMs included in this application instance type, as well as their requested/allocated CPU per VM type. A ticket may also be generated for tracing and logging.

If the verification is negative, meaning that the number of requested accounting units exceeds the number of granted accounting units, then a notification and/or alert is generated and sent to the VNF Manager and/or EMS and/or CMS 16 in order to announce a grace period for the extra requirement beyond the license rights. A ticket may also be generated for reporting.

The above alternative is called start-up answer in the following.

In the particular case in which the centralized license service 17 is not accessible, then the VNF Manager and/or EMS and/or CMS 16 is allowed to let the application instance or VM start for a grace period, and generates and alert and a ticket.

The VNF Manager and/or EMS and/or CMS 16 is configured to generate a ticket to be transmitted to the centralized license service 17 at the start-up of the software application or the VM to report, per started application instance:
- The total number of deployed application instances of the type of the application instance started-up,
- The total number of active VMs of deployed application instances of the type of the application instance started-up,

The ticket further reports information about each active VM in the deployed application instance, such as the names of active VM, type of VM, number of active VMs, allocated CPU for the active VMs, reference of the application instance comprising the VMs and the like.

A second illustrative event 23 is described in the following, which is a shutdown of a given application instance. In this case, a LCR 20 is submitted towards the centralized license service 17 providing information about the application instance to be shut down such as:
- The name and type of the application instance, and
- The requested action, which is a shutdown.

After receiving the LCR 20, the centralized license service 17 decreases the counters of currently deployed application instances of this type. A ticket may also be generated for tracing and logging.

A third illustrative event 23 is described in the following, which is a scaling event. A scaling event is a modification which occurs on a deployed application instance, such as a start-up of a new VM or an increase of allocated CPU of a given VM.

In this case, during scaling, when the VNF Manager and/or EMS and/or CMS 16 is configured to start a new VM in the application instance, a LCR 20 is submitted towards the centralized license service 17, providing information about the application instance such as:
- The name and type of the application instance,
- The requested action, which is a start-up of a VM, and
- The name and type of the VM as well as the requested CPU per VM type in the application instance

After receiving the LCR 20, the centralized license service 17 performs the start-up verifications, in which the following verification from the start-up verifications:
- If the name and type of the application instance to be installed or started up belongs to the granted application instances,
is performed in the case in which a new application instance is started.

The centralized license service 17 is then configured to perform the start-up answer.

Similar operation is performed during a shutdown of a VM of a given type inside the application instance, wherein the corresponding counters is decreased accordingly.

The VNF Manager and/or EMS and/or CMS 16 is configured to generate a ticket to be transmitted to the centralized license service 17 updating the status of the application instance, which comprises:
- the name and type of the deployed application instance
- the number of deployed and of active application instances of this type
- the total number of active VMs in the deployed application instance

The ticket further reports information about each active VM in the deployed application instance, such as the names of active VM, type of VM, number of active VMs, allocated CPU for the active VMs, reference of the application instance comprising the VMs and the like.

A forth illustrative event 23 is described in the following, which is an upgrade event. The license control is activated during the upgrade interval and enables the cohabitation of two different application instances running until the upgrade is complete. For example, the upgrade is a migration of the network resources from former optical nodes to new optical nodes for the running of the software application. In that case, the upgrade interval lasts until the former optical nodes are shutdown.

Particular cases from the following list will now be described:
- Emergency license
- Demonstration license mode
- Site license with unlimited accounting units
- Alert and license grace period, and
- Security and certificate handshake

The centralized license service 17 is further configured to deliver an emergency license. In that case, The centralized license service 17 is configured to enable the events 23 to occur before that the application platform 7 gets a license key and a setting of a valid operational license. The centralized license service 17 enables:
- Either the granted accounting units are unlimited for a defined short period in order to get and set the operational license key,
- Or the granted accounting units are limited to the limit of keeping a minimum required number of granted active VMs on the application platform 7.

The centralized license service 17 is further configured to deliver a demonstration license. The demonstration license has two possible behavior profiles, which are to be selected as a choice:
- a first profile in which granted accounting units are limited but allowed for an unlimited period, or
- a second profile in which the granted accounting units are unlimited for short period.

The centralized license service 17 is further configured to deliver a site license with unlimited accounting units in which a software application is allowed to be deployed over unlimited accounting units. In the site license with unlimited accounting units, the reporting, tickets and counters are triggered and updated as well in order to trace the activated application instances and VMs.

The centralized license service 17 is further configured to deliver an alert and license grace period. When the centralized license service 17 detects that the number of requested accounting units is higher than the granted accounting units, then the centralized license service 17 triggers a notification alert notifying the VNF Manager and/or EMS and/or CMS 16 that the contractual number of accounting units is exceeded. The notification alert indicates that the requested accounting units will be authorized to run with an exceeded number of accounting units for a grace period. A grace mode flag is indicated in the centralized licensing service 17 with start and end date of the grace period for the requested accounting units. Beyond the grace period, if no extra contractual number of granted accounting units is registered into the centralized license service 17 database, the number of accounting units returns to the previous one.

A ticket is generated in all cases, when a grace period is started, when the license is updated with extra number of granted accounting units, or when the grace period is expired without extra number of granted accounting units.

The centralized license service 17 is further configured to perform a security and certificate handshake in order to secure the exchanges of messages between the VNF Manager and/or EMS and/or CMS 16 and the centralized license service 17. The software application 5 is tied to the centralized license service 17 and self contains restrictions and certificates. For example, the software application 5 and the centralized license service 17 are provided by a common provider 32, as shown by arrows 33 and 34. The certificates are installed by the VNF Manager and/or EMS and/or CMS 16 on each VMs and application instance and a handshake mechanism is configured between the VNF Manager and/or EMS and/or CMS 16 and the centralized license service 17. For security, the LCR 20 submitted to centralize license service 20 may contain also the host identifier. Host identifier can be serial number or one of the MAC addresses of hardware server hosting. The centralized license service 17 further checks at each application instance start-up whether if this host identifier is included in a list of authorized host identifier registered in the database or not.

The method and devices above described may applied to a mix of virtual and native application instance running side by side. The centralized license service 17 is therefore further configured to control the whole number of accounting unit of an application instance whatever if the application instance is native or virtual.

In an embodiment, the CMS is replaced by a cloud management system orchestrator, or any system managing the network application, virtual network application instance, or virtual machine.

In an embodiment, the method and devices above described may also applied to native application instance. In such an embodiment, the identity of the granted application instance comprises the type of application instance, which is selected between native or virtual.

The steps of the method above described may be performed in the successive order or not.

The license device, the VNF Manager and/or EMS and/or CMS 16, the centralized license service 17 and each VM described in this disclosure may be implemented through the use of dedicated hardware as well as hardware capable of executing software in association with appropriate software. When provided by a processor, the corresponding functions may be provided by a single dedicated processor, by a single shared processor, or by a plurality of individual processors, some of which may be shared. Moreover, explicit use of the term "processor" or "controller" should not be construed to refer exclusively to hardware capable of executing software, and may implicitly include, without limitation, central processing unit (CPU), digital signal processor (DSP) hardware, network processor, application specific integrated circuit (ASIC), field programmable gate array (FPGA), read-only memory (ROM) for storing software, random access memory (RAM), and nonvolatile storage. Other hardware, conventional and/or custom, may also be included.

The license device can be implemented to have the centralized license service 17 interacting in a unitary manner and/or in a centralized way with the Network Function Virtualization management and orchestration service and/or the Cloud Management System (CMS) 16.

The license device can be implemented to have the centralized license service 17 interacting in a distributed manner with multiple VNF managers and/or multiple NMS/EMS managers of Virtualized Network Functions/Applications instances.

Each VM described in this disclosure may be implemented in a unitary manner or in a distributed manner.

The license device, the CMS 16, the centralized license service 17 and each VM described in this disclosure may comprise interface means, for example a coaxial cable and/or screen and/or a keyboard and/or a mouse and/or a joystick and/or a printer and/or a voice recorder and/or a printer and/or a voice synthetiser and/or a memory data files recorder, to enable a user to read and to write data and to execute instructions in the form of files in the HTML, JAVASCRIPT and/or other language. The interfaces of the devices may be implemented in a unitary manner or in a distributed manner.

The disclosure is not limited to the described embodiments. The appended claims are to be construed as embodying all modification and alternative constructions that may be occurred to one skilled in the art, which fairly fall within the basic teaching here, set forth.

The use of the verb "to comprise" or "to include" and its conjugations does not exclude the presence of elements or steps other than those stated in a claim. Furthermore, the use of the article "a" or "an" preceding an element or step does not exclude the presence of a plurality of such elements or steps.

In the claims, any reference signs placed between parentheses shall not be construed as limiting the scope of the claims.

## Claims

1. A method for controlling the execution of an application in a virtual computer environment (4), the method comprising the steps of:
- receiving a request (19) for launching an action performed by an application (5) executed in the virtual computer environment (4),
- determining a number of requested accounting units wherein the accounting units directly or indirectly represent an amount of resources consumed by the application which are necessary to launch the action,
- sending an authorization request (20) to a license system, the authorization request comprising the identity of the application and the number of requested accounting units,
- receiving an authorization response (21) from the license system, the authorization response comprising the identity of the application and a number of granted accounting units,
- checking (22) if the number of granted accounting units matches the number of requested accounting units and authorizing (19a) the launching of the action in the affirmative, and inhibiting (19b) the launching of the action in the negative.

2. A method according to claim 1, further comprising the step of receiving an alert message if the number of granted accounting units does not match the number of requested accounting units.

3. A method according to claim 1 or 2, wherein the accounting units are resource accounting units and are selected in the following list:
- application instances, an application instance comprising a set of virtual machines, and/or central processing units and/or memory resources, which are part of the resources consumed by the application
- virtual machines consumed to run the application per application instance
- central processing units consumed to run the application per application instance
- virtual central processing units consumed to run the application per application instance
- random access memory and/ or storage capacity used to report the number of sessions and/or transactions per second,
- interface cards used to deploy the application.

4. A method according to any of claims 1 to 3, wherein the action is selected in the following list:
- Start-up of an application instance (25), an application instance comprising a set of virtual machines (27 to 31), and/or central processing units and/or memory resources, which are part of the resources consumed by the application
- Restart of an application instance
- Shutdown of an application instance
- Start-up of a virtual machine,
- Restart of a virtual machine,
- Shutdown of a virtual machine,
- Scaling down an application instance by removing virtual resources such as central processing unit , random access memory, storage, network resources, application instance and/or virtual machine
- Scaling up an application instance by starting new virtual resources such as central processing unit , random access memory, storage, network resources, application instance and/or virtual machine
- Installing the application
- Opening an emergency protocol
- Upgrading the application.

5. A method according to any of claims 1 to 4, wherein the application is an application managing the transactions on a network (8).

6. A method according to claim 5, wherein the accounting units comprise a number of employed native and/or virtual network interfaces cards, an number of employed IP addresses and network ports, of native and/or virtual routers, native and/or virtual optical cross-connects, native and/or virtual optical channels, native and/or virtual regenerators.

7. A method according to claim 4 or 5, wherein the application is a policy control resource function.

8. A method according to claim 4 or 5, wherein the application is an online charging system.

9. A method according to claim 8, wherein the accounting units are network service accounting units and are selected in the following list:
- number of subscribers managed by the application on the network
- number of transaction per second on the network allowed by the application
- active sessions per second, an active session comprising current transactions
- request per second performed on the network managed by the application
- call attempt per second on the client network managed by the application.

10. A Control Device for controlling the execution of an application in a virtual computer environment, comprising a cloud management system (16) comprising:
- - an input for receiving a request (19) for launching an action performed by an application (5) executed in the virtual computer environment (4),
- a management unit configured for determining a number of requested accounting units wherein the accounting units directly or indirectly represent an amount of resources consumed by the application which are necessary to launch the action,
- an output for sending an authorization request (20) to a license system, the authorization request comprising the identity of the application and the number of requested accounting units,
- the input further receiving an authorization response (21) from the license system, the authorization response comprising the identity of the application and a number of granted accounting units,
- the management unit being further configured for checking (22) if the number of granted accounting units matches the number of requested accounting units and authorizing (19a) the launching of the action in the affirmative, and inhibiting (19b) the launching of the action in the negative.

11. **A** control device in accordance with claim 10 implemented in a distributed manner.

12. A control device in accordance with claim 10 implemented in a unitary and/or centralized manner.

13. A Control device in accordance with claim 10, further comprising a license service (17) comprising:
- an input for receiving the authorization request (20)
- an output for transmitting the authorization response (21)
- a control unit configured for
- calculating a total number of accounting units as a sum of a recorded number of current accounting units consumed by the application and of the requested number of accounting units,
- comparing an authorization record to the authorization request, the comparison comprising checking that the identity of the application belongs to a recorded list of authorized applications and checking that the total number of accounting units is lower than the recorded number of authorized accounting units for the application
- recording the sum value as the updating current accounting units emulating the application, and
- a data repository (18) in which is stored the recorded list of authorized applications and the recorded number of authorized accounting units for the application.

14. A control device in accordance with claim 13 implemented in a distributed manner where the centralized license service interacts with multiple VNF managers of Virtualized Network Function/Application instances or the corresponding multiple Element Management Systems.

15. A control device in accordance with claim 13 implemented in a unitary and/or centralized manner where the centralized license service interacts with centralized Network Function Virtualization management and orchestration service and/or centralized Cloud Management System of virtual environment.
